# EUROPEAN PATENT SPECIFICATION

(11) **EP 1 976 725 B1**
(45) Date of publication and mention of the grant of the patent: **17.05.2017**
(21) Application number: 07709128.8
(22) Date of filing: 10.01.2007
(51) Int. Cl.: B60P 3/22

(54) **INFLATABLE ELEMENT FOR INTERNAL USE IN THE CONTAINER OF A TRANSPORT OR STORAGE DEVICE; METHOD FOR INFLATING THE ELEMENT**
AUFBLASBARES ELEMENT ZUR INNEREN VERWENDUNG IM BEHÄLTER EINER TRANSPORT- ODER LAGERUNGSVORRICHTUNG, VERFAHREN ZUM AUFBLASEN DES ELEMENTS
ELEMENT GONFLABLE A UTILISER A L'INTERIEUR DU CONTENANT D'UN DISPOSITIF DE TRANSPORT OU DE STOCKAGE ET PROCEDE POUR GONFLER LEDIT ELEMENT

(30) Priority: 10.01.2006 NL 1030882
(43) Date of publication of application: 08.10.2008
(73) Proprietor: Accede B.V., 7545 PN Enschede (NL)
(72) Inventor: Eenkhoorn, Erik Jeroen, 7558 HG Hengelo OV (NL)
(74) Representative: Klooster, Jan Hanri
(86) International application number: PCT/NL2007/000009
(87) International publication number: WO 2007/081201

(56) References cited:
- EP-A- 1 386 859
- DE-A1- 10 251 966
- DE-A1- 19 744 359
- FR-A- 900 012
- FR-A- 945 320
- GB-A- 2 110 192
- LU-A- 38 593
- US-A- 4 483 454

## Description

The invention relates to an inflatable element (also indicated as airbag) for use interiorly in a holder, the holder being suitable for storing or transporting a liquid load, particularly for a holder of a storage device like a tank container or a storage tank. The inflatable element is provided with stretchable or elastically foldable wall or walls, which fold in or out by supplying or discharging inflating gas into or from the inflatable element, in that in the inflated use position the inflatable element is provided with such a size that the volume of the liquid load plus the volume of the inflatable element essentially is equal to the internal volume of the holder.

It is known that the cargo in transportable tanks (tank lorries) and road trucks due to various causes, e.g. by accelerating or speeding up or by braking or decelerating, by high speed in bends; or by swerving caused by (near) collisions, may exhibit an undesired dynamical behaviour which even may result in turning over of the vehicle. This effect is for a major part dependant upon the type of cargo contained in the storage tank, the truck or the tanker. For example free movable (low viscous) liquid will easily be brought into motion when subjected to a sudden manoeuvre of the tanker. De back and forth moving or sloshing of the liquid may supply an additional impulse force thereby accelerating turning over of the tanker or truck. Due to statutory regulations in order to prevent sloshing or oscillating of the liquid in the axial longitudinal or driving direction of the tank, baffle plates are mounted inside holders having a volume above a certain limit. These baffle plates have the disadvantage that they only damp axial liquid movements so that non-axial movement of the liquid, like radial or tangential movement, will not be dampened or only to a small extend. Furthermore these plates have their own mass and volume, thereby decreasing the capacity of the holder. Moreover these plates are usually fixedly mounted inside the interior of the holder, so that labour-intensive interiorly mounting, inspection, repair en cleaning will be necessary. Furthermore the fixedly mounted plates inside the holder will transmit a portion of the impulse force and the energy of the oscillating liquid to the holder and the holder wall.

It is known that vapour is formed above the liquid surface depending upon the known physical liquid-vapour equilibrium and the resulting vapour pressure as a function of temperature. Particularly volatile liquids such as fuels, which have a high vapour pressure at ambient temperatures, will fill the free space of the holder with considerable amounts of the liquid load transported after the holder is emptied. The vapour will be continuously present when the liquid only partially fills the holder. Therefore it is not possible to discharge all of the loaded liquid because a portion thereof is evaporated into vapour and is not liquefied at the filling or discharge point. Furthermore it is known that vapour/air mixtures of fuels may easily explode particularly when stoichiometrically mixed, making extensive security measures necessary. The presence of air in the holder may furthermore be undesired because of possible deterioration of the quality of the transported load. Also measures must be taken against undesired emissions of vapour from the holder into the environment like the surrounding air.

DE 10251966 discloses an inflatable bag, airbag or balloon for use in the interior of a holder, the holder being suitable for storing or transporting a liquid load, the inflatable bag is provided with stretchable wall or walls, which fold in or out by supplying or discharging inflating gas into or from the inflatable bag, in that in the inflated use position the inflatable bag is provided with such a size that the volume of the liquid load plus the volume of the inflatable element essentially is equal to the internal volume of the holder. The inflatable bag is inflated and pressurized by means of e.g. a compressor with an inflating gas like air or with inflating gas from a high pressure reservoir or storage so that the balloon will fill a portion of the free space of the holder thereby reducing sloshing of the liquid and the formation of vapour. This is disadvantageous when the excess pressure in the balloon is greater than the static pressure exerted by the liquid load onto the bottom of the holder and situations could emerge whereby the holder wall is loaded with this excess pressure so that as a result the holder will be categorized as a pressure vessel. As a result the holder must meet the certification requirements for pressure vessels like thicker walls and the possibility for interior inspection. For existing holders like underground fuel tanks and tank trucks this is a great disadvantage because expensive additional measures inside the holder, like repositioning on the ground and/or mounting of pressure safety valves, become necessary when introducing an airbag. Another disadvantage of this known embodiment is that the high internal pressure in the balloon will more quickly result in the formation of leaking holes, so that air losses will occur. The balloon must be air tight at operating pressure. These inflatable balloons cannot easily be adapted to variations in the fill ratio of the load in the holder. It is almost impossible to fill the free space above the liquid with such a balloon for an almost empty or almost filled holder. Furthermore the wall of the balloon will be unevenly stretched when it touches the wall of the holder, while in the longitudinal direction all of the free space above the liquid is filled. Positioning of more than one inflatable bag into the holder shall only partly solve the stretch problems with changing fill ratio's. Furthermore is it difficult to provide precise close nearby positing of the individual bags so that individual control of the bags will be necessary.

Object of the invention is to provide an inflatable element which can be easily adapted to the free space above the liquid in the holder without applying high internal pressures, so that an anti-slosh devices as well as a reduction of the vapour space is realised.

This objective is achieved by the inflatable element comprising at least two compartments, wherein a first compartment is positioned upon the upper side of a second compartment such that in use in the holder the first compartment essentially is contacting the interior wall of the holder and the second compartment essentially is contacting the upper surface of the liquid load.
With abovementioned features the airbag may be easily adjusted to the changing shape and size of the free space above the liquid, while at the same time high pressures inside the holder are avoided. Furthermore the operating pressure in the inflatable element may be made equal to the static pressure in the holder. This allows for the required and wished self-control of the volume of the inflatable element. During filling and emptying of the holder the volume of the inflatable element will simultaneously increase or decrease by means of the inflating gas supply and the discharge valve which is controlled by means of the pressure inside the inflatable element. Herewith may also be automatically compensated for the changes of the volume of the liquid during transport by an opposite volume change of the inflatable element e.g. for use by fuel consumption of the vehicle during driving. As a result no information is needed about the pressure and/or the volume of the liquid load in the holder.

By these features an airbag is obtained which may be easily folded in or out and furthermore will damp liquid oscillations very well.

Particularly the first and the second compartment each are provided with inflating means for supplying or discharging inflating gas to or from the inflatable element; preferably the first compartment is connected with an external inflating means and the second compartment is connected with the first compartment by means of an internal inflating means in such a way that by supplying inflating gas into the first compartment firstly the foldable or stretchable wall will fold open, and secondly by means of the internal inflating means the inflating air is supplied into the second compartment. By these measures easily folding in and open of the airbag is obtained and furthermore only one inflating means, like an inflating hose, is necessary for two compartments.

Advantageously is the embodiment whereby the second compartment is configured by a wall provided between the outer ends of the first compartment and by the interior accordion wall of the first compartment. In this way the second compartment may be easily and at low costs be produced while moreover a good contact with the liquid surface is obtained and as a result thereof a good damping.

In a preferred embodiment the invention is characterized by the inflatable element consisting of at least two element sections which are provided closely adjacently in the interior of the holder; particularly two or more first compartments of adjacent elements sections are mutually connected and are constituting a continuous compartment, while the adjacent second compartments, provided under the first compartments, are configured as element sections. This embodiment having two inflatable elements in each holder will result in a considerable increase of the stability of the liquid load without having the need to attach the inflatable elements onto the wall of the holder. The inflatable elements will strive for the highest position in the holder and as a result deform at the mutual contact locations. Deformation of the inflatable elements does not allow for a common direction of rotation, so that the bag cannot roll or rotate over the inner wall of the holder in spite of the dynamic effects of the load acting upon the bags.

Possible is an embodiment with internal inflating means are provided between the compartments of adjacent element sections; preferably internal inflating means are provided between the second compartments of adjacent elements sections. With these feature an inflating element is obtained with an increased damping effect.

Furthermore the invention relates to a holder for use as transport means for a liquid load being provided with an inflatable element.

Furthermore the invention relates to a transport or storage device comprising a holder being provided with an inflatable element.

The invention also relates to a method for inflating an inflatable element in a holder of a transport or storage device, comprising the following steps:
- inflating he inflatable element by supplying inflating gas to the first compartment by means of the external inflating means;
- inflating the second compartment of the element by supplying inflating gas from the first compartment to the second compartment by means of the internal inflating means.

Particularly the method further comprises the step: inflating the second compartment of an adjacent element section by supplying inflating gas from the second compartment of the first element section to the second compartment of the second element section by means of an inflating means provided between the element sections.

Advantageously by applying this method the airbag may be easily expanded and contracted inside the holder by changes of the load and the fill ratio.

The invention is further explained by means of a drawing of an embodiment of the inflatable element, whereby features and other advantages will come forward.
Fig. 1 shows in cross-sectional view a holder of a tank truck, provided with an inflatable element according to the invention;
Fig. 2 shows in cross-sectional view the holder of Fig.1, provided with an inflatable element having two compartments,
Fig. 3 shows a schematic cross-sectional side view of the holder, whereby the holder in longitudinal direction is provided with two inflatable element(s) (sections),
Fig.4 shows the means for controlling the pressure in the inflatable element,
Fig.5 shows in cross-sectional view the holder of Fig.1 provided with two inflatable elements.

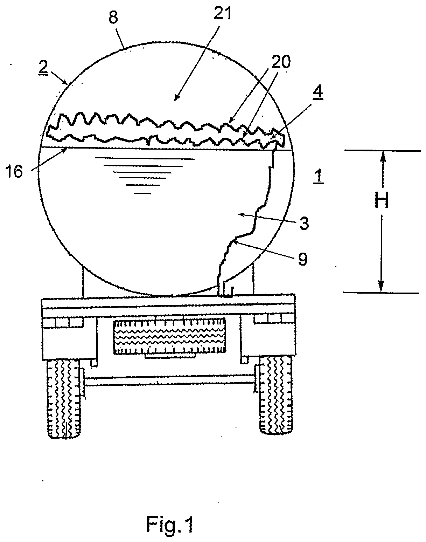

Fig.1 shows a transport or storage device 1 provided with a holder 2. In this example the storage device is a tanker or tank truck 1, being provided with a holder 2 or tank and being configured for transporting of a liquid load 3. The holder 2 is about half filled with liquid 3, so that the liquid upper surface 16 is located approximately in the middle of the holder. On top of the upper surface 16 floats an inflatable element or airbag 4, which consists of foldable walls or accordion partitions 20. The airbag 4 is provided with inflating means 9, in this embodiment an inflating hose 9, which is leaded-through the bottom side of the wall of the holder. The inflating hose 9 is connected near the bottom side of the holder with inflating auxiliaries (not shown) like e.g. an air compressor and a control unit for supplying and discharging inflating gas like air or another gaseous product into or from the inflatable element 4. Furthermore control means like control lights are provided in the cabin of a cargo truck. Because the airbag 4 is provided with foldable walls 20 the airbag will easily increase in volume by supplying air, without having the need for a high and increasing internal pressure inside the airbag 4.

The airbag 4 consists of a single compartment between the accordion partitions(walls) 20. In the embodiment of Fig.1 the airbag is provided with a relatively flat shape and fills only partially the free space 21 of the holder. As a result formation of liquid oscillations will be reduced or slowed down by the floating airbag 4 upon the liquid surface 16 and furthermore the sloshing movements of the liquid 3 in the holder 2 will be damped. This damping effect may be increased by further inflating and unfolding the airbag 4 so that the accordion wall 20 will contact the interior wall 8 of the holder. The airbag 4 being in inflated position or state will now completely fill the free space 21, so that vapour formation above the liquid is prevented.

The airbag described in the abovementioned example may also be used in non-moving or static holders like fuel tanks. Movement of the liquid will not be generated in this type of immovable holder so that sloshing or oscillating will not occur and no damping features are necessary for the airbag applied herein.

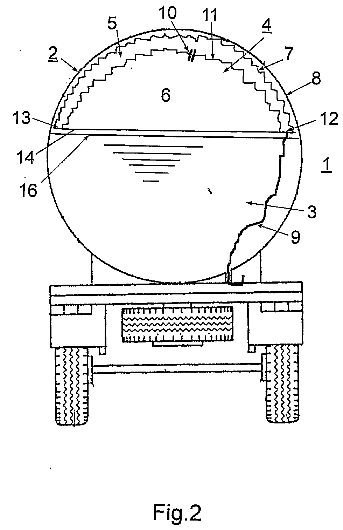

Fig.2 shows in cross-sectional view the holder of the tanker 1 provided with an inflatable element 4 according to a second embodiment of the invention. In this embodiment the airbag 4 comprises two compartments 5, 6.

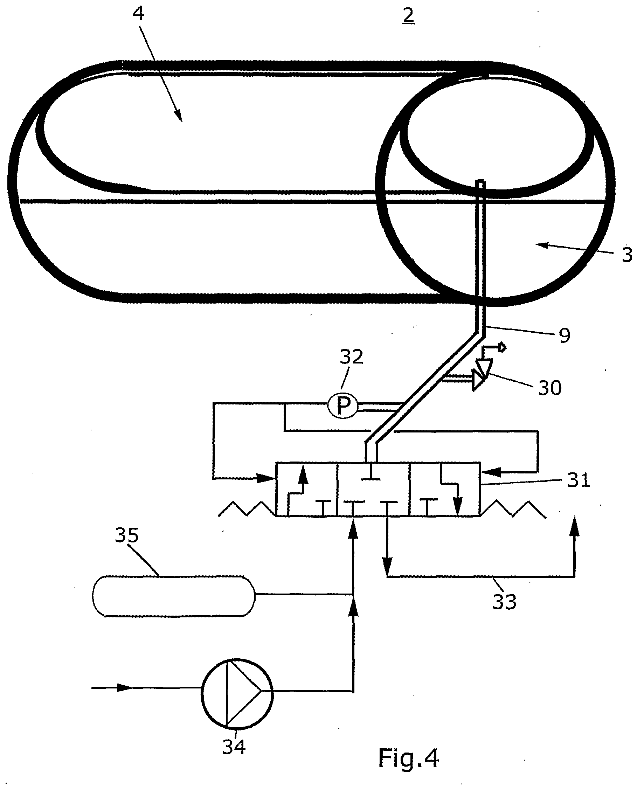

The first compartment 5 comprises foldable or accordion walls 7, 11 and the second compartment 6 herein is configured by the accordion wall 11 of the first compartment and by the third wall 14. The inflatable element 4 fills now entirely the free space in the holder while the third wall 14 is positioned nearby the free liquid surface 16 or is even contacting or floating upon the liquid surface. The first compartment 5 having accordion walls 7, 11 is configured above the second compartment 6, so that in inflated position the first compartment 5 with its first accordion wall 7 is engaging the interior wall 8 of the holder 2. Other combinations comprising more compartments provided with foldable walls are considered to be fall within the scope of the invention. The inflatable element 4 is provided with an inflating means 9; in this embodiment an inflating hose 9, which is leaded-through the wall 8 of the bottom side of the holder 2 is connected with inflating auxiliaries, like e.g. an air compressor. In this embodiment the inflating hose 9 is connected with the first compartment 5, but if required the inflating hose may also be connected with the second compartment or be connected with each compartment using separate hoses. By supplying inflating gas, like e.g. air, by means of the hose 9 into the first compartment 5, the accordion walls 7, 11 will unfold and the volume of the inflatable element 4 will be increased, without an substantial increase of the pressure in the 5, contrary to balloons of the known type. In Fig.4 a preferred embodiment is shown of a pressure control assembly for control of the pressure in the inflatable element 4 of the holder 2. In this example the inflatable element 4 is provided with a (control) valve 31 connected with a pressure sensor 32 so that as a result of a measured low pressure a connection is made with compressor 35 of the inflating gas supply and as a result of a measured high pressure a connection is made with the inflating gas discharge 33. Instead of the use of a compressor for supplying the inflating air into the inflatable element 4 an high pressure inflating air reservoir 35 may be used. In the example as shown in Fig.4 a safety valve 30 is mounted upon inflating means 9 between the control valve 31 and the inflatable element 4.

In the embodiment of Fig.2 a second internal inflating means 10 is attached between the first and the second compartment. As a result firstly the first compartment 5 will unfold with the supply of air, while in second instance, by means of a slight surplus pressure in the first compartment, air is displaced from the first compartment into the second compartment. The configuration van Fig.2 has the advantage that by supplying or discharging air firstly into or form the first compartment it will unfold or fold in along the interior wall 8 of the holder 2 so that always a close-fittingly filling of the free space of the holder 2 is guaranteed. In the embodiment of Fig.2 the lower wall 14 nearby the liquid surface 16 is flat and smooth, so that as a result an improved damping effect is obtained of oscillations of the liquid in the holder. If desired three or more compartments may be provided in the inflatable element 4, or each compartment may be provided with separate, non-shared, foldable or unfoldable walls. In this embodiment of Fig.2 the bottom wall 14 of the second compartment 6 is mounted upon the outer ends 12, 13 of the first compartment so that the bottom wall may easily take up a flat and smooth position with each fill ratio of the holder 2.

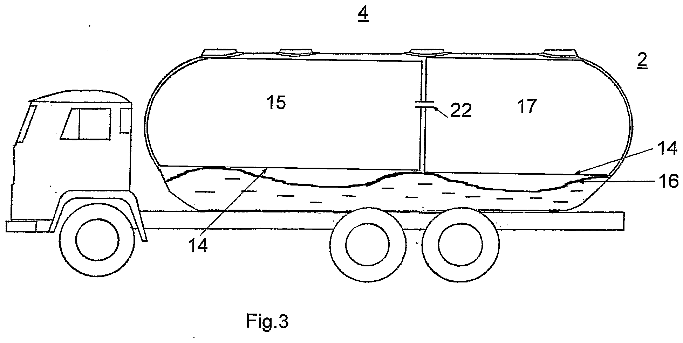

Fig.3 shows schematically a cross-sectional side view of the holder 2 with inflatable element 4 consisting of two element sections 15, 17, which are axially mounted in longitudinal direction in the interior of the holder 2. Furthermore two element sections are shown in longitudinal direction, but other configurations having more element sections in axial or radial direction and other technical, for a person skilled in the art know, equivalent feature may be possible. The element sections may be separately mounted inside the holder 2; alternatively they may also be mutually connected.

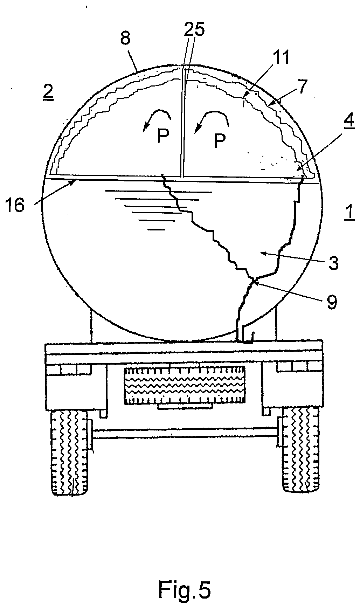

A preferred embodiment consists of two or more (identical) inflatable elements positioned inside the holder, each element consisting of one or more compartments This embodiment is shown in Fig.5 having two elements 4 being in mutual contact with side walls 25. The two or more inflatable elements 4 are striving for the highest position in the holder 2 and as a result will mutually deform each particularly there where they contact each other or the holder wall. The deformation of the inflatable elements 4 will not allow for a common direction of rotation of the elements according arrow P, so that the elements cannot roll or rotate over the inner wall 8 of the holder 2 in spite of the dynamic effects of the load 3 acting upon the elements.

Partitioning of the inflatable element provides for technical manufacturing advantages and renders mounting, inspection, repair and cleaning inside a large holder very easy. In an alternative embodiment the element sections each may be provided with compartments; it is advantageous to mutually connect adjacent first compartments having foldable walls into one big continuous compartment, while the lower positioned adjacent second compartments remain separated and do not form a big continuous compartment. As a result displacement of the air is prevented caused by sloshing and oscillating of the liquid and the damping effect of the inflatable element will increase. In an advantageous embodiment internal inflating means 22 are provided between the element sections in longitudinal direction of the holder 2, particularly between the second compartments, whereby the inflating means may be provided with a constriction for reduction of the gas flow. As a result, during oscillating of the liquid in the axial direction of the holder, gas may displace in opposite direction of the wave movement of the liquid, which will have an additional damping effect upon the sloshing liquid.

In Fig.3 is schematically shown internal inflating means 22 located between two element sections 15, 17. In order to prevent and damp tangential or radial liquid oscillations in the holder 2 and to prevent turning over of the tanker truck, the internal inflating means may also be provided between the compartments of the in radial direction located element sections.

The inflatable element may be positioned unattached to the holder or may be (fixedly) connected with the holder; preferably the element is connected in such a way to the holder that ample forces are exerted upon the wall of the holder.

When in de description is mentioned "inflating" or "inflatable element" it includes all volume increasing systems having the same effect upon the solution of increasing the volume of an airbag without applying an high internal pressure.

The inflatable element may be manufactured from any suitable material like a plastic or fabric.

## Claims

1. Inflatable element for use internally in a holder (2), the holder being suitable for storing or transporting a liquid load (3), the inflatable element (4) is provided with stretchable or elastically foldable wall or walls (7, 11, 20), which fold in or out by supplying or discharging inflating gas into or from the inflatable element (4), in that in the inflated use position the inflatable element (4) is provided with such a size that the volume of the liquid load (3) plus the volume of the inflatable element (4) essentially is equal to the internal volume of the holder (2),
**characterized in that** the inflatable element (4) comprises at least two compartments (5, 6), wherein a first compartment (5) is positioned upon the upper side of a second compartment (6) such that in use in the holder (2) the first compartment (5) essentially is contacting the interior wall (8) of the holder (2) and the second compartment (6) essentially is contacting the upper surface (16) of the liquid load (3),
and **in that** the absolute pressure in the inflatable element (4) is essentially not higher than ambient pressure plus the static pressure exerted by the static liquid height (H) in a completely filled holder (2), so that as a result said pressure remains below the design pressure of the holder and/or below the set pressure of the safety valve of the holder.

2. Inflatable element according to claim 1, **characterized in that** the inflatable element (4) in inflated position is having a shape corresponding to the internal shape of the free space in the holder (2) filled with liquid load (3), in such a way that the walls (7, 14, 20) are close-fittingly contacting the interior wall (8) of the holder (2) and the top surface (16) of the liquid load (3).

3. Inflatable element according to anyone of the preceding claims 1 - 2,
**characterized in that** the exterior walls (7, 14, 20) in use position are all provided with wall stretch-tension.

4. Inflatable element according to anyone of the preceding claims 3 - 5,
**characterized in that** the first and the second compartment (5, 6) each are provided with inflating means (9, 10) for supplying or discharging inflating gas to or from the inflatable element (4).

5. Inflatable element according to anyone of the preceding claims 1 - 6,
**characterized in that** a first compartment (5) is connected with an external inflating means (9) and a second compartment (6) is connected with the first compartment (5) by means of an internal inflating means (10) in such a way that by supplying inflating gas into the first compartment (5) firstly the foldable or stretchable wall (7, 11) will fold open, and secondly by means of the internal inflating means (10) the inflating air is supplied into the second compartment (6).

6. Inflatable element according to anyone of the preceding claims 1 - 5,
**characterized in that** the second compartment (6) is configured by a wall (14) provided between the outer ends (12, 13) of the first compartment (5) and by an interior accordion wall (11) of the first compartment (5).

7. Inflatable element according to anyone of the preceding claims 1 - 6,
**characterized in that** the inflatable element (4) is consisting of at least two element sections (15, 17) which are closely adjacently provided within the interior of the holder (2).

8. Inflatable element according to claim 7, **characterized in that**, two or more first compartments (5) of adjacent elements sections are mutually connected and are constituting a continuous compartment, while the adjacent second compartments (6), provided under the first compartments, are configured as element sections (15, 17).

9. Inflatable element according to claim 7 or 8, **characterized in that**, internal inflating means (22) are provided between the compartments (5, 6) of adjacent element sections (15, 17).

10. Inflatable element according to claim 9, **characterized in that**, internal inflating means (22) are provided between the second compartments of adjacent elements sections (15, 17).

11. Holder for use as transport means for a liquid load (3) being provided with an inflatable element (4) according to anyone of the preceding claims 1 - 10.

12. Transport or storage device comprising a holder according to claim 11 being provided with an inflatable element (4) according to anyone of the preceding claims 1 - 10.

13. Method for inflating an inflatable element according to anyone of the preceding claims 4 - 10 in a holder (2) of a transport or storage device (1), comprising the following steps:
- inflating an inflatable element (4) by supplying inflating gas to a first compartment (5) by means of an external inflating means (9);
- inflating a second compartment (6) of the element (4) by supplying inflating gas from the first compartment (5) to the second compartment (6) by means of internal inflating means (10);
- inflating the second compartment of an adjacent element section by supplying inflating gas from the second compartment of the first element section to the second compartment of the second element section by means of an inflating means provided between the elements sections.

## Patentansprüche

1. Aufblasbares Element zur internen Verwendung in einem Behälter (2), wobei der Behälter zum Aufbewahren oder Transportieren einer flüssigen Ladung (3) geeignet ist, das aufblasbare Element (4) mit einer dehnbaren oder elastisch faltbaren Wand oder Wänden (7, 11, 20) versehen ist, welche sich durch Zuführen oder Ablassen von aufblasendem Gas in oder aus dem aufblasbaren Element (4) ein- oder entfalten, wobei in der aufgeblasenen Verwendungsposition, das aufblasbare Element (4) eine solche Größe aufweist, dass das Volumen der flüssigen Ladung (3) zuzüglich des Volumens des aufblasbaren Elements (4) im Wesentlichen gleich dem internen Volumen des Behälters (2) ist,
**dadurch gekennzeichnet, dass** das aufblasbare Element (4) zumindest zwei Kammern (5, 6) umfasst, wobei eine erste Kammer (5) über der Oberseite einer zweiten Kammer (6) angeordnet ist, sodass bei Verwendung in dem Behälter (2) die erste Kammer (5) im Wesentlichen die innere Wand (8) des Behälters (2) berührt und die zweite Kammer (6) im Wesentlichen die obere Oberfläche (16) der flüssigen Ladung (3) berührt,
und dadurch, dass der absolute Druck in dem aufblasbaren Element (4) im Wesentlichen nicht höher ist als Umgebungsdruck zuzüglich dem statischen Druck, der durch die statische Flüssigkeitshöhe (H) in einem komplett gefüllten Behälter (2) ausgeübt wird, sodass als eine Folge der Druck unterhalb dem Auslegungsdruck des Behälters und/oder unterhalb dem eingestellten Druck des Sicherheitsventils des Behälters bleibt.

2. Aufblasbares Element nach Anspruch 1, **dadurch gekennzeichnet, dass** das aufblasbare Element (4) in aufgeblasener Position eine zu der inneren Form des freien Raums, der mit flüssiger Ladung (3) gefüllt ist, in dem Behälter (2) korrespondierende Form hat, in einer solchen Weise, dass die Wände (7, 14, 20) engpassend die inneren Wand (8) des Behälters (2) und die obere Oberfläche (16) der flüssigen Ladung (3) berühren.

3. Aufblasbares Element nach einem der Ansprüche 1 - 2, **dadurch gekennzeichnet, dass** die Außenwände (7, 14, 20) in Verwendungsposition alle mit Wand-Dehnungsspannung versehen sind.

4. Aufblasbares Element nach einem der vorangehenden Ansprüche 3 - 5, **dadurch gekennzeichnet, dass** die erste und die zweite Kammer (5, 6) jeweils mit Aufblasmitteln (9, 10) zum Zuführen oder Ablassen von aufblasenden Gas in oder aus dem aufblasbaren Element (4) versehen sind.

5. Aufblasbares Element nach einem der vorangehenden Ansprüche 1 - 6, **dadurch gekennzeichnet, dass** eine erste Kammer (5) mit einem äußeren Aufblasmittel (9) verbunden ist und eine zweite Kammer (6) mit der ersten Kammer (5) mittels eines internen Aufblasmittels (10) in solch einer Weise verbunden ist, dass bei Zuführung von aufblasendem Gas in die erste Kammer (5) sich erstens die faltbare oder dehnbare Wand (7, 11) auffaltet und zweitens mittels eines internen Aufblasmittels (10) die aufblasende Luft in die zweite Kammer (6) zugeführt wird.

6. Aufblasbares Element nach einem der vorangehenden Ansprüche 1 - 5, **dadurch gekennzeichnet, dass** die zweite Kammer (6) durch eine Wand (14) gebildet ist, die zwischen den äußeren Enden (12, 13) der ersten Kammer (5) und durch eine innere Ziehharmonika-Wand (11) der ersten Kammer (5) vorgesehen ist.

7. Aufblasbares Element nach einem der vorangehenden Ansprüche 1 - 6, **dadurch gekennzeichnet, dass** das aufblasbare Element (4) aus zumindest zwei Elementabschnitten (15, 17) besteht, die eng nebeneinander im Inneren des Behälters (2) vorgesehen sind.

8. Aufblasbares Element nach Anspruch 7, **dadurch gekennzeichnet, dass** zwei oder mehr erste Kammern (5) von benachbarten Elementabschnitten miteinander verbunden sind und eine kontinuierliche Kammer bilden, während die benachbarten, unter den ersten Kammern vorgesehenen, zweiten Kammern (6) als Elementabschnitte (15, 17) ausgebildet sind.

9. Aufblasbares Element nach Anspruch 7 oder 8, **dadurch gekennzeichnet, dass** interne Aufblasmittel (22) zwischen den Kammern (5, 6) benachbarter Elementabschnitte (15, 17) vorgesehen sind.

10. Aufblasbares Element nach Anspruch 9, **dadurch gekennzeichnet, dass** interne Aufblasmittel (22) zwischen den zweiten Kammern benachbarter Elementabschnitte (15, 17) vorgesehen sind.

11. Behälter zur Verwendung als Transportmittel für eine flüssige Ladung (3) versehen mit einem aufblasbaren Element (4) nach einem der vorangehenden Ansprüche 1 - 10.

12. Transport- oder Lagervorrichtung umfassend einen Behälter nach Anspruch 11, der mit einem aufblasbaren Element (4) nach einem der vorangehenden Ansprüche 1 - 10 versehen ist.

13. Verfahren zum Aufblasen eines aufblasbaren Elements nach einem der vorangehenden Ansprüche 4 - 10 in einem Behälter (2) einer Transport- oder Lagervorrichtung (1), umfassend die folgenden Schritte:
- Aufblasen eines aufblasbaren Elements (4) durch Zuführen eines aufblasenden Gases in eine erste Kammer (5) mittels eines externen Aufblasmittels (9);
- Aufblasen einer zweiten Kammer (6) des Elements (4) durch Zuführen von aufblasenden Gas von der ersten Kammer (5) zu der zweiten Kammer (6) mittels interner Aufblasmittel (10);
- Aufblasen der zweiten Kammer eines benachbarten Elementabschnitts durch Zuführen von aufblasendem Gas von der zweiten Kammer des ersten Elementabschnitts zu der zweiten Kammer des zweiten Elementabschnitts mittels eines Aufblasmittels, das zwischen den Elementabschnitten vorgesehen ist.

## Revendications

1. Elément gonflable à utiliser à l'intérieur d'un contenant (2), le contenant étant adapté au stockage ou au transport d'un chargement liquide (3), l'élément gonflable (4) est pourvu d'une paroi ou de parois extensibles ou pliables élastiquement (7, 11, 20), qui se plient ou se déplient en insufflant ou en évacuant du gaz de gonflage dans ou depuis l'élément gonflable (4), en ce que, dans la position d'utilisation gonflée, l'élément gonflable (4) est pourvu d'une taille telle que le volume du chargement liquide (3) plus le volume de l'élément gonflable (4) est essentiellement égal au volume interne du contenant (2),
**caractérisé en ce que** l'élément gonflable (4) comprend au moins deux compartiments (5, 6), dans lequel un premier compartiment (5) est positionné sur la face supérieure d'un second compartiment (6) de telle sorte qu'en utilisation dans le contenant (2) le premier compartiment (5) est essentiellement en contact avec la paroi interne (8) du contenant (2) et le second compartiment (6) est essentiellement en contact avec la surface supérieure (16) du chargement liquide (3),
et **en ce que** la pression absolue dans l'élément gonflable (4) n'est essentiellement pas plus élevée que la pression ambiante plus la pression statique exercée par la hauteur statique du liquide (H) dans un contenant entièrement rempli (2), de telle sorte que, par conséquent, ladite pression reste inférieure à la pression de conception du contenant et/ou inférieure à la pression définie de la soupape de sécurité du contenant.

2. Elément gonflable selon la revendication 1, **caractérisé en ce que** l'élément gonflable (4) en position gonflée a une forme correspondant à la forme interne de l'espace libre dans le contenant (2) rempli avec le chargement liquide (3), de telle sorte que les parois (7, 14, 20) sont en contact étroit avec la paroi interne (8) du contenant (2) et la surface supérieure (16) du chargement liquide (3).

3. Elément gonflable selon l'une quelconque des revendications 1 - 2, **caractérisé en ce que** les parois externes (7, 14, 20) en position d'utilisation sont toutes pourvues d'une tension d'extension de paroi.

4. Elément gonflable selon l'une quelconque des revendications 3 - 5, **caractérisé en ce que** le premier et le second compartiment (5, 6) sont chacun pourvus de moyens de gonflage (9, 10) pour insuffler ou évacuer du gaz de gonflage dans ou depuis l'élément gonflable (4).

5. Elément gonflable selon l'une quelconque des revendications 1 - 6, **caractérisé en ce qu'**un premier compartiment (5) est raccordé à un moyen de gonflage extérieur (9) et un second compartiment (6) est raccordé au premier compartiment (5) à l'aide d'un moyen de gonflage intérieur (10) de telle sorte qu'en insufflant du gaz de gonflage dans le premier compartiment (5) premièrement la paroi pliable ou extensible (7, 11) va se déplier, et deuxièmement à l'aide du moyen de gonflage intérieur (10) l'air de gonflage est insufflé dans le second compartiment (6).

6. Elément gonflable selon l'une quelconque des revendications 1 - 5, **caractérisé en ce que** le second compartiment (6) est configuré par une paroi (14) disposée entre les extrémités extérieures (12, 13) du premier compartiment (5) et par une paroi intérieure en accordéon (11) du premier compartiment (5).

7. Elément gonflable selon l'une quelconque des revendications 1 - 6, **caractérisé en ce que** l'élément gonflable (4) consiste en au moins deux sections d'élément (15, 17) qui sont disposées de façon étroitement adjacente à l'intérieur du contenant (2).

8. Elément gonflable selon la revendication 7, **caractérisé en ce que** deux premiers compartiments (5) ou plus de sections d'éléments adjacentes sont mutuellement raccordés et constituent un compartiment continu, tandis que les seconds compartiments adjacents (6), disposés sous les premiers compartiments, sont configurés comme des sections d'éléments (15, 17).

9. Elément gonflable selon la revendication 7 ou 8,
**caractérisé en ce que** les moyens de gonflage intérieurs (22) sont disposés entre les compartiments (5, 6) de sections d'éléments adjacentes (15, 17).

10. Elément gonflable selon la revendication 9, **caractérisé en ce que** les moyens de gonflage intérieurs (22) sont disposés entre les seconds compartiments de sections d'éléments adjacentes (15, 17).

11. Contenant pour une utilisation comme moyen de transport pour un chargement liquide (3) pourvu d'un élément gonflable (4) selon l'une quelconque des revendications 1 - 10.

12. Dispositif de transport ou de stockage comprenant un contenant selon la revendication 11 pourvu d'un élément gonflable (4) selon l'une quelconque des revendications 1 - 10.

13. Procédé pour gonfler un élément gonflable selon l'une quelconque des revendications 4 - 10 dans le contenant (2) d'un dispositif de transport ou de stockage (1), comprenant les étapes suivantes :
- le gonflage d'un élément gonflable (4) en insufflant du gaz de gonflage dans un premier compartiment (5) à l'aide d'un moyen de gonflage extérieur (9) ;
- le gonflage d'un second compartiment (6) de l'élément (4) en insufflant du gaz de gonflage du premier compartiment (5) au second compartiment (6) à l'aide de moyens de gonflage intérieurs (10) ;
- le gonflage du second compartiment d'une section d'élément adjacente en insufflant du gaz de gonflage du second compartiment de la première section d'élément au second compartiment de la seconde section d'élément à l'aide d'un moyen de gonflage disposé entre les sections d'éléments.
